# FASCICULE DE BREVET EUROPEEN

(11) **EP 0 595 714 B1**
(45) Date de publication et mention de la délivrance du brevet: **05.08.1998**
(21) Numéro de dépôt: 93402631.1
(22) Date de dépôt: 26.10.1993
(51) Int. Cl.: B60H 1/00, B60H 1/22, F25B 29/00

(54) **Dispositif de climatisation plus particulièrement pour véhicule électrique**
Klimaanlage insbesondere für Elektrofahrzeug
Air conditioning device, in particular for electric vehicle

(30) Priorité: 26.10.1992 FR 9212741
(43) Date de publication de la demande: 04.05.1994
(73) Titulaire: VALEO THERMIQUE HABITACLE, 78320 Le Mesnil-Saint-Denis (FR)
(72) Inventeur: Benedict, Olusegun, F-91940 Les Ulis (FR)
(74) Mandataire: Gamonal, Didier

(56) Documents cités:
- EP-A- 0 431 760
- EP-A- 0 504 653
- WO-A-92/16389

## Description

L'invention concerne un dispositif de climatisation de l'habitacle d'un véhicule, dans lequel un fluide réfrigérant circule de façon univoque entre un évaporateur où il reçoit de la chaleur et un condenseur où il cède de la chaleur.

Un tel dispositif est utilisé couramment pour refroidir, notamment en été, un flux d'air à envoyer dans l'habitacle, en le mettant en contact avec l'évaporateur.

En revanche, lorsqu'on souhaite réchauffer un flux d'air avant de l'envoyer dans l'habitacle, on utilise habituellement à cet effet la chaleur dégagée par le moteur thermique d'entraînement du véhicule.

Dans le cas d'un véhicule électrique, la chaleur produite par le système d'entraînement électrique n'est pas suffisante, en hiver, pour couvrir les besoins de chauffage de l'habitacle. Il est alors nécessaire de prévoir une source auxiliaire de chaleur.

Il est connu par le document WO-A-92/16389 un dispositif de climatisation de l'habitacle d'un véhicule, notamment d'un véhicule à entraînement électrique, dans lequel un fluide réfrigérant circule de façon univoque entre un évaporateur où il reçoit de la chaleur et un condenseur où il cède de la chaleur, qui sont tous deux des échangeurs de chaleur fluide-liquide, l'évaporateur recevant de la chaleur d'un liquide en circulation et le condenseur cédant de la chaleur à un liquide en circulation, le liquide cédant de la chaleur à l'évaporateur circule entre celui-ci et un troisième échangeur de chaleur liquide-air recevant lui-même de la chaleur d'un premier flux d'air, cet échangeur étant un échangeur de chaleur de climatisation disposé dans le trajet d'un flux d'air vers l'habitacle, le liquide recevant de la chaleur du condenseur circule entre celui-ci et un quatrième échangeur de chaleur liquide-air cédant lui-même de la chaleur à un second flux d'air, ce quatrième échangeur étant un échangeur de chaleur extérieur disposé dans le trajet d'air extérieur à l'habitacle, ces deux échangeurs constituant respectivement le troisième échangeur et le quatrième échangeur dans une première configuration du dispositif, utilisable en été, et constituant respectivement le quatrième échangeur et le troisième échangeur dans une seconde configuration du dispositif utilisable en hiver, des moyens étant prévus pour envoyer le premier flux d'air dans l'habitacle pour refroidir celui-ci en été et pour envoyer le second flux d'air dans l'habitacle pour réchauffer celui-ci en hiver, et l'évaporateur, le condenseur, l'échangeur de climatisation et l'échangeur extérieur étant montés respectivement dans des première, seconde, troisième et quatrième branches d'un circuit de liquide et des moyens de commutation étant prévus pour mettre les troisième et quatrième branches en boucle avec les première et seconde branches respectivement dans la première configuration et avec les seconde et première branches respectivement dans la seconde configuration

Un but de l'invention est de tirer parti, pour le chauffage de l'habitacle, de l'appareil de climatisation existant, sans changer le sens de circulation du fluide réfrigérant.

Un autre but de l'invention est de limiter les sollicitations auxquelles est soumis notamment l'évaporateur en améliorant le rendement de l'échange de chaleur.

Un autre but encore est de permettre une optimisation de la disposition des différents éléments du dispositif dans le véhicule.

L'invention vise notamment un dispositif du genre défini en introduction, caractérisé en ce que les moyens de commutation comprennent huit branches de dudit circuit de liquide, à savoir des cinquième et sixième branches propres à raccorder l'une à l'autre les première et troisième branches pour former une première boucle fermée, des septième et huitième branches propres à raccorder l'une à l'autre les seconde et quatrième branches pour former une seconde boucle fermée, des neuvième et dixième branches propres à raccorder l'une à l'autre les première et quatrième branches pour former une troisième boucle fermée, des onzième et douzième branches propres à raccorder l'une à l'autre les seconde et troisième branches pour former une quatrième boucle fermée, une première vanne à trois voies ayant une première voie reliée à une extrémité de l'une des première et troisième branches, une seconde voie reliée à une extrémité de la cinquième branche et une troisième voie reliée à une extrémité de l'une des neuvième et onzième branches, une seconde vanne à trois voies ayant une première voie reliée à une extrémité de l'une des première et troisième branches, une seconde voie reliée à une extrémité de la sixième branche et une troisième voie reliée à une extrémité de l'une des dixième et douzième branches, une troisième vanne à trois voies ayant une première voie reliée à une extrémité de l'une des seconde et quatrième branches, une seconde voie reliée à une extrémité de la septième branche et une troisième voie reliée à une extrémité de l'une des neuvième et onzième branches, une quatrième vanne à trois voies ayant une première voie reliée à une extrémité de l'une des seconde et quatrième branches, une seconde voie reliée à une extrémité de la huitième branche et une troisième voie reliée à une extrémité de l'une des dixième et douzième branches, et des moyens de commande coordonnée propres à mettre en commutation les premières voies des première, seconde, troisième et quatrième vannes avec leurs secondes voies pour établir la première configuration et avec leurs troisièmes voies pour établir la seconde configuration.

Le rendement d'échange de chaleur au niveau de l'évaporateur est meilleur entre le fluide réfrigérant et le liquide dans le dispositif selon l'invention qu'entre le fluide réfrigérant et un flux d'air dans le dispositif connu. De plus, ni l'évaporateur ni le condenseur n'étant en contact direct avec les flux d'air à envoyer dans l'habitacle, le circuit de fluide réfrigérant peut être groupé en un endroit où suffisamment de place est disponible pour le recevoir.

D'autres caractéristiques, complémentaires ou alternatives, du dispositif selon l'invention sont énoncées ci-après :
- Il comprend un échangeur de chaleur supplémentaire disposé dans le trajet d'un flux d'air de désembuage du pare-brise du véhicule, et des moyens pour faire circuler le liquide dans ledit échangeur supplémentaire, en parallèle avec l'évaporateur, dans la seconde configuration.
- La circulation du liquide dans l'échangeur supplémentaire est interrompue dans la première configuration.

D'autres caractéristiques et avantages de l'invention apparaîtront à l'examen de la description détaillée ci-après, et des dessins annexés, sur lesquels :
- les figures 1 et 2 sont des schémas montrant un dispositif de climatisation selon l'invention respectivement dans une configuration d'été et dans une configuration d'hiver; et
- la figure 3 est un schéma analogue à la figure 2, relatif à une variante du dispositif.

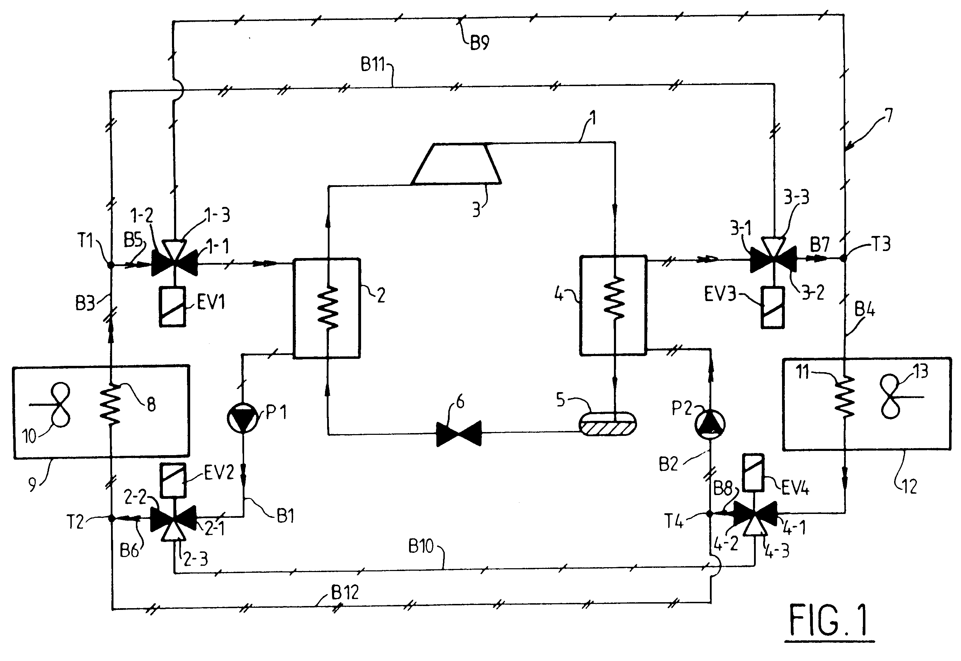

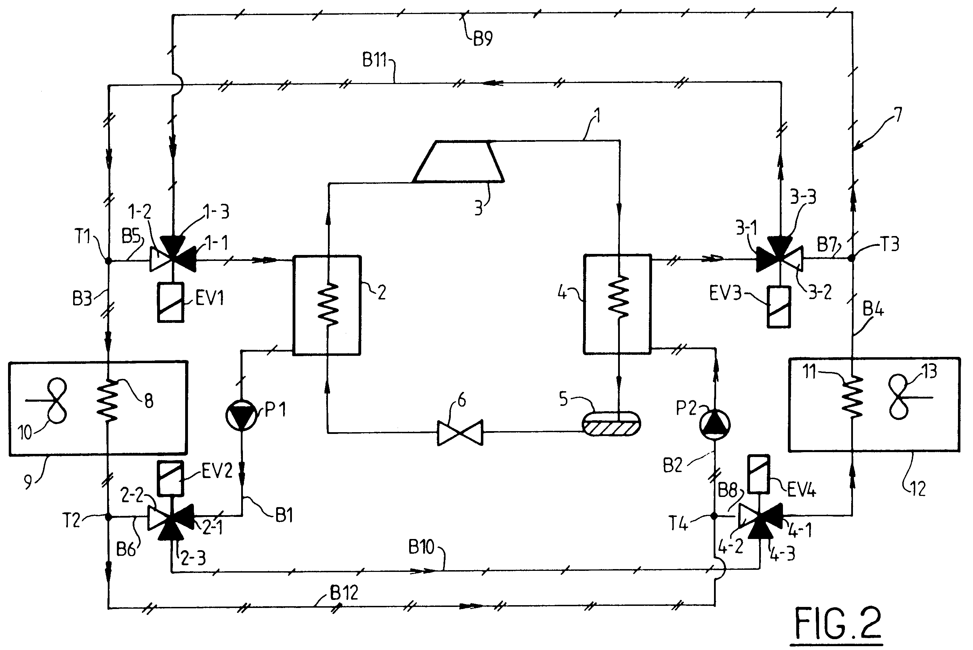

Le dispositif illustré aux figures 1 et 2 est destiné à la climatisation d'un véhicule à entraînement électrique. Il comprend un circuit de fluide réfrigérant 1 dans lequel circule un fluide réfrigérant évoluant entre l'état liquide et l'état gazeux, notamment un fluide à base d'hydrocarbures fluorés, et comportant de façon classique un évaporateur 2, un compresseur 3, un condenseur 4, une bouteille/déshydrateur 5 et un détendeur 6.

Selon l'invention, l'évaporateur 2 et le condenseur 4 sont des échangeurs de chaleur fluide-liquide dans lesquels s'effectue un échange de chaleur entre le fluide réfrigérant du circuit 1 et un liquide circulant dans un second circuit 7. A cet effet, l'évaporateur et le condenseur sont montés respectivement dans des branches B1 et B2 du circuit 7, qui comportent également des pompes de circulation P1 et P2.

Deux échangeurs de chaleur liquide-air ou radiateurs sont par ailleurs montés dans des branches B3 et B4 du circuit 7, à savoir respectivement un radiateur d'habitacle 8 placé dans l'habitacle 9 du véhicule, sur le trajet d'un flux d'air produit par un groupe motoventilateur 10 pour être envoyé à l'intérieur de l'habitacle, et un radiateur extérieur 11 disposé dans le compartiment moteur 12 du véhicule, sur le trajet d'un flux d'air produit par un groupe motoventilateur 13 et circulant entièrement à l'extérieur de l'habitacle. Le circuit 7 comprend également huit branches de raccordement et quatre électrovannes à trois voies commandées de façon coordonnée, permettant d'établir les deux configurations illustrées respectivement aux figures 1 et 2, dans chacune desquelles le liquide circule indépendamment, d'une part entre l'évaporateur et l'un des radiateurs 8 et 11, d'autre part entre le condenseur et l'autre radiateur.

Les deux extrémités d'une branche de raccordement B5 sont reliées respectivement à une seconde voie 1-2 d'une électrovanne à trois voies EV1, dont une première voie 1-1 est reliée à une première extrémité de la branche B1, et à une première extrémité T1 de la branche B3. De même, les deux extrémités d'une branche de raccordement B6 sont reliées respectivement à une seconde voie 2-2 d'une électrovanne à trois voies EV2 dont une première voie 2-1 est reliée à la seconde extrémité de la branche B1, et à la seconde extrémité T2 de la branche B3. Une branche de raccordement B7 a ses extrémités reliées respectivement à une seconde voie 3-2 d'une électrovanne à trois voies EV3, dont une première voie 3-1 est reliée à une première extrémité de la branche B2, et sa seconde extrémité reliée à une première extrémité T3 de la branche B4. Une autre branche de raccordement B8 a ses extrémités reliées respectivement à la seconde extrémité T4 de la branche B2, et à une seconde voie 4-2 d'une électrovanne à trois voies EV4 dont la première voie 4-1 est reliée à la seconde extrémité de la branche B4. Les extrémités d'une branche de raccordement B9 sont reliées respectivement à la troisième voie 1-3 de l'électrovanne EV1 et à la jonction T3, celles d'une branche de raccordement B10 aux troisièmes voies 2-3 et 4-3 des électrovannes EV2 et EV4, les extrémités d'une branche de raccordement B11 à la jonction T1 et à la troisième voie 3-3 de l'électrovanne EV3 et enfin celles d'une branche de raccordement B12 aux jonctions T2 et T4.

Pour établir la première configuration du dispositif, illustré à la figure 1, chacune des électrovannes EV1, EV2, EV3 et EV4 est commandée de façon à mettre en communication ses première et seconde voies. Une première boucle fermée du circuit de liquide 7 est donc formée par les branches B1, B6, B3 et B5. Le liquide circule dans cette boucle au moyen de la pompe P1. Le liquide, par exemple une solution aqueuse de glycol ou une huile, cède de la chaleur au fluide réfrigérant du circuit 1 dans l'évaporateur 2 et en reçoit du flux d'air produit par le groupe motoventilateur 10 dans le radiateur 8. Ce flux d'air est donc refroidi et permet de refroidir, en été, l'atmosphère de l'habitacle du véhicule. Une seconde boucle fermée du circuit 7 est formée par les branches B2, B7, B4 et B8, et le liquide y circule grâce à la pompe P2. Le fluide réfrigérant transmet au liquide, dans le condenseur 4, la chaleur qu'il reçoit dans l'évaporateur 2, et cette chaleur est cédée par le liquide, dans le radiateur 11, au flux d'air produit par le groupe motoventilateur 13, et est ainsi dissipé à l'extérieur de l'habitacle. Aucun liquide ne circule dans les branches B9 à B12.

Dans la seconde configuration illustrée à la figure 2, les électrovannes EV1 à EV4 sont au contraire commandées de façon à mettre en communication les premières voies avec les troisièmes voies. Une première boucle fermée du circuit 7 est formée par les branches B1, B10, B4 et B9, dans laquelle le liquide circule au moyen de la pompe P1. Ce liquide cède de la chaleur au fluide réfrigérant dans l'évaporateur 2, et en reçoit, dans le radiateur 11, du flux d'air produit par le groupe motoventilateur 13. Dans une seconde boucle fermée formée par les branches B2, B11, B3 et B12, le liquide circule au moyen de la pompe P2, reçoit de la chaleur du fluide réfrigérant dans le condenseur 4 et la cède, dans le radiateur 8, au flux d'air produit par le groupe motoventilateur 10, permettant à celui-ci de réchauffer l'habitacle en hiver. Le bilan du fonctionnement du dispositif comporte donc le prélèvement de chaleur à l'extérieur de l'habitacle et son transfert à l'intérieur de celui-ci.

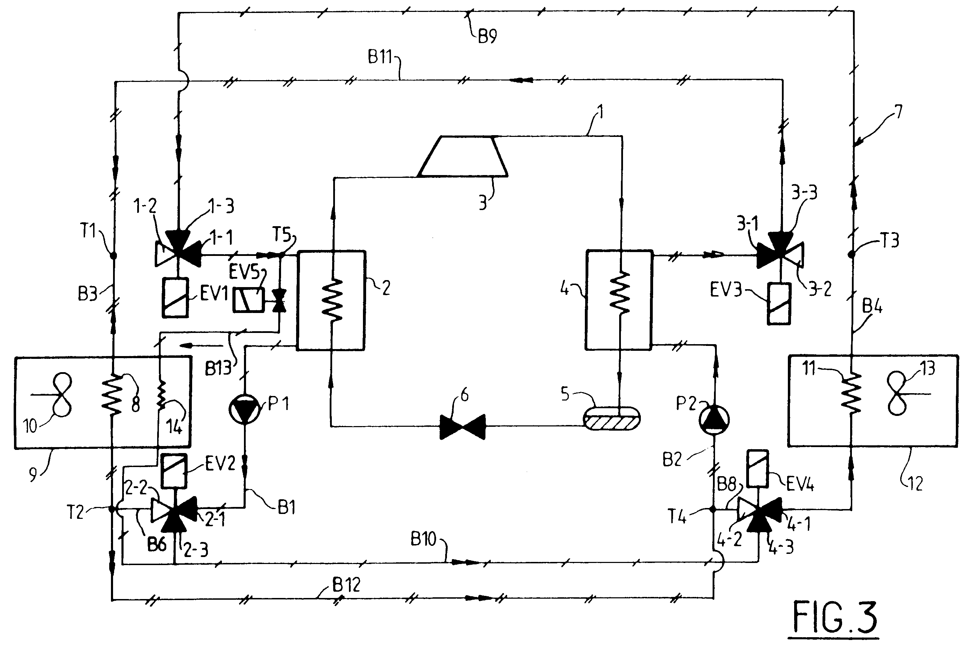

Le dispositif de la figure 3 comprend les mêmes éléments que celui des figures 1 et 2, désignés par les mêmes signes de référence. Il comporte une branche supplémentaire B13 du circuit 7 de liquide dont les extrémités sont reliées respectivement à la branche B1, en une jonction T5 située entre l'évaporateur 2 et l'électrovanne EV1, et à la branche B10 en une jonction T6 située entre les électrovannes EV2 et EV4. Sur la branche B13 sont montées une électrovanne de réglage EV5 et un radiateur supplémentaire 14 disposé dans l'habitacle 9, dans le trajet d'une fraction de flux d'air destiné au dégivrage/désembuage du pare-brise du véhicule. Lorsque le dispositif est dans sa configuration "été", où la branche B10 est isolée par les électrovannes EV2 et EV4, aucun liquide ne circule dans la branche B13 qui débouche en T6 dans la précédente. Au contraire, dans la configuration "hiver", la branche B13 se trouve en parallèle avec la branche B1 par l'intermédiaire du passage 2-1/2-3 de l'électrovanne EV2. L'ouverture partielle ou totale de l'électrovanne EV5 entraîne un partage du liquide entre l'évaporateur 2 et le radiateur 14. Le liquide parcourant le radiateur 14, partiellement refroidi par son passage dans le radiateur 8, permet un chauffage du flux d'air de désembuage pouvant être réglé par l'électrovanne EV5.

Dans les exemples décrits, trois vannes à trois voies EV1, EV2 et EV3 sont raccordées directement aux branches du circuit de liquide contenant l'évaporateur et le condenseur, la quatrième électrovanne à trois voies EV4 étant raccordée directement à la branche B4 contenant le radiateur extérieur 11. De façon générale, selon l'invention, chacune de ces quatre électrovannes peut être raccordée directement, au choix, à l'une des branches contenant l'évaporateur et le condenseur ou à l'une des branches contenant le radiateur de climatisation et le radiateur extérieur.

Dans ces mêmes exemples, les pompes de circulation P1 et P2 sont montées dans les branches B1 et B2, et le sens de circulation du liquide dans les branches B3 et B4 s'inverse de la première configuration à la seconde configuration. Les pompes pourraient aussi être montées dans les branches B3 et B4, l'inversion du sens de circulation se produisant dans les branches B1 et B2.

## Revendications

1. Dispositif de climatisation de l'habitacle d'un véhicule, notamment d'un véhicule à entraînement électrique, dans lequel un fluide réfrigérant circule de façon univoque entre un évaporateur (2) où il reçoit de la chaleur et un condenseur (4) où il cède de la chaleur, qui sont tous deux des échangeurs de chaleur fluide-liquide, l'évaporateur recevant de la chaleur d'un liquide en circulation et le condenseur cédant de la chaleur à un liquide en circulation, le liquide cédant de la chaleur à l'évaporateur circule entre celui-ci et un troisième échangeur de chaleur liquide-air (8 ,11) recevant lui-même de la chaleur d'un premier flux d'air, ce troisième échangeur étant un échangeur de chaleur de climatisation (8) disposé dans le trajet d'un flux d'air vers l'habitacle (9), le liquide recevant de la chaleur du condenseur circule entre celui-ci et un quatrième échangeur de chaleur liquide-air (11, 8) cédant lui-même de la chaleur à un second flux d'air, ce quatrième échangeur étant un échangeur de chaleur extérieur (11) disposé dans le trajet d'air extérieur à l'habitacle, ces deux échangeurs constituant respectivement le troisième échangeur et le quatrième échangeur dans une première configuration du dispositif, utilisable en été, et constituant respectivement le quatrième échangeur et le troisième échangeur dans une seconde configuration du dispositif utilisable en hiver, des moyens (10, 13) étant prévus pour envoyer le premier flux d'air dans l'habitacle pour refroidir celui-ci en été et pour envoyer le second flux d'air dans l'habitacle pour réchauffer celui-ci en hiver, et l'évaporateur, le condenseur, l'échangeur de climatisation et l'échangeur extérieur étant montés respectivement dans des première, seconde, troisième et quatrième branches (B1-B4) d'un circuit (7) de liquide et des moyens de commutation étant prévus pour mettre les troisième et quatrième branches en bouche avec les première et seconde branches respectivement dans la première configuration et avec les seconde et première branches respectivement dans la seconde configuration, caractérisé en ce que les moyens de commutation comprennent huit branches de raccordement (B5-B12) dudit circuit de liquide, à savoir des cinquième et sixième branches (B5, B6) propres à raccorder l'une à l'autre les première et troisième branches pour former une première boucle fermée, des septième et huitième branches (B7, B8) propres à raccorder l'une à l'autre les seconde et quatrième branches pour former une seconde boucle fermée, des neuvième et dixième branches (B9, B10) propres à raccorder l'une à l'autre les première et quatrième branches pour former une troisième boucle fermée, des onzième et douzième branches (B11, B12) propres à raccorder l'une à l'autre les seconde et troisième branches pour former une quatrième bouche fermée, une première vanne à trois voies (EV1) ayant une première voie (1-1) reliée à une extrémité de l'une des première et troisième branches, une seconde voie (1-2) reliée à une extrémité de la cinquième branche et une troisième voie (1-3) reliée à une extrémité de l'une des neuvième et onzième branches, une seconde vanne à trois voies (EV2) ayant une première voie (2-1) reliée à une extrémité de l'une des première et troisième branches, une seconde voie (2-2) reliée à une extrémité de la sixième branche et une troisième voie (2-3) reliée à une extrémité de l'une des dixième et douzième branches, une troisième vanne à trois voies (EV3) ayant une première voie (3-1) reliée à une extrémité de l'une des seconde et quatrième branches, une seconde voie (3-2) reliée à une extrémité de la septième branche et une troisième voie (3-3) reliée à une extrémité de l'une des neuvième et onzième branches, une quatrième vanne à trois voies (EV4) ayant une première voie (4-1) reliée à une extrémité de l'une des seconde et quatrième branches, une seconde voie (4-2) reliée à une extrémité de la huitième branche et une troisième voie (4-3) reliée à une extrémité de l'une des dixième et douzième branches, et des moyens de commande coordonnée propres à mettre en commutation les premières voies des première, seconde, troisième et quatrième vannes avec leurs secondes voies pour établir la première configuration et avec leurs troisièmes voies pour établir la seconde configuration.

2. Dispositif selon la revendication 1, caractérisé en ce que deux pompes de circulation (P1, P2) sont montées dans les première et seconde branches respectivement.

3. Dispositif selon la revendication 1, caractérisé en ce que deux pompes de circulation (P1, P2) sont montées dans les troisième et quatrième branches respectivement.

4. Dispositif selon l'une des revendications 2 ou 3, caractérisé en ce que le sens de circulation du liquide est inversé, de la première configuration à la seconde configuration, dans celles des première, seconde, troisième et quatrième branches qui ne comportent pas les pompes de circulation.

5. Dispositif selon l'une des revendication 1 à 4, caractérisé en ce qu'il comprend un échangeur de chaleur supplémentaire (14) disposé dans le trajet d'un flux d'air de désembuage du pare-brise du véhicule, et des moyens pour faire circuler le liquide dans ledit échangeur supplémentaire, en parallèle avec l'évaporateur, dans la seconde configuration.

6. Dispositif selon la revendication 5, caractérisé en ce que la circulation du liquide dans l'échangeur supplémentaire est interrompue dans la première configuration.

## Claims

1. An air conditioning apparatus for the cabin of a vehicle, especially an electrically propelled vehicle, in which a refrigerant fluid flows in one direction between an evaporator (2), in which it receives heat, and a condenser (4) in which it yields heat, both of which are fluid-liquid heat exchangers, the evaporator receiving heat from a flowing liquid and the condenser yielding heat to a flowing liquid, the liquid yielding heat to the evaporator flows between the latter and a third liquid-air heat exchanger (8, 11), itself receiving heat from a first stream of air, the said third heat exchanger being an air conditioning heat exchanger (8) disposed in the path of a stream of air towards the cabin (9), the liquid receiving heat from the condenser flows between the latter and a fourth liquid-air heat exchanger (11, 8) which itself yields heat to a second stream of air, the said fourth heat exchanger being an outside heat exchanger (11) disposed in the path of air outside the cabin, the said two exchangers constituting, respectively, the third exchanger and the fourth exchanger in a first configuration of the apparatus for use in summer, and constituting, respectively, the fourth exchanger and the third exchanger in a second configuration of the apparatus for use in winter, with means (10, 13) being provided for sending the first stream of air into the cabin for cooling the latter in summer and for sending the second stream of air into the cabin for heating the latter in winter, and the evaporator, the condenser, the air conditioning exchanger and the outside exchanger being mounted respectively in first, second, third and fourth branches (B1 - B4) of a liquid circuit (7), and switching means being provided for putting the third and fourth branches into a loop with the first and second branches respectively in the first configuration, and with the second and first branches respectively in the second configuration, characterised in that the switching means comprise eight connecting branches (B5 - B12) of the said liquid circuit, namely fifth and sixth branches (B5, B6) for connecting the first and third branches to each other so as to form a first closed loop, seventh and eighth branches (B7, B8) for connecting the second and fourth branches to each other so as to form a second closed loop, ninth and tenth branches (B9, B10), for connecting the first and fourth branches together so as to form a third closed loop, eleventh and twelfth branches (B11, B12) for connecting the second and third branches together so as to form a fourth closed loop, a first three-way valve (EV1) having a first way (1-1) connected to one end of one of the first and third branches, a second way (1-2) connected to one end of the fifth branch, and a third way (1-3) connected to one end of one of the ninth and eleventh branches, a second three-way valve (EV2) having a first way (2-1) connected to one end of one of the first and third branches, a second way (2-2) connected to one end of the sixth branch, and a third way (2-3) connected to one end of one of the tenth and twelfth branches, a third three-way valve (EV3) having a first way (3-1) connected to one end of one of the second and fourth branches, a second way (3-2) connected to one end of the seventh branch, and a third way (3-3) connected to one end of one of the ninth and eleventh branches, a fourth three-way valve (EV4) having a first way (4-1) connected to one end of one of the second and fourth branches, a second way (4-2) connected to one end of the eighth branch, and a third way (4-3) connected to one end of one of the tenth and twelfth branches, and coordinated control means adapted to put the first ways of the first, second, third and fourth valves into communication with their second ways so as to establish the first configuration, and with their third ways so as to establish the second configuration.

2. Apparatus according to Claim 1, characterised in that two circulation pumps (P1, P2) are connected in the first and second branches respectively.

3. Apparatus according to Claim 1, characterised in that two circulation pumps (P1, P2) are connected in the third and fourth branches respectively.

4. Apparatus according to Claim 2 or Claim 3, characterised in that the direction of flow of the liquid is reversed, from the first configuration to the second configuration, in those of the first, second, third and fourth branches which do not contain the circulation pumps.

5. Apparatus according to one of Claims 1 to 4, characterised in that it includes a supplementary heat exchanger (14) disposed in the path of a stream of air for demisting the windscreen of the vehicle, and means for causing the liquid to flow in the said supplementary heat exchanger in parallel with the evaporator, in the second configuration.

6. Apparatus according to Claim 5, characterised in that the flow of the liquid in the supplementary heat exchanger is interrupted in the first configuration.

## Patentansprüche

1. Klimaanlage für den Fahrgastraum eines Fahrzeugs, insbesondere eines Fahrzeugs mit Elektroantrieb, bei dem ein Kältemittel in einer Richtung zwischen einem Verdampfer (2), in dem es Wärme aufnimmt, und einem Kondensator (4), in dem es Wärme abgibt, zirkuliert, die beide Fluid-Flüssigkeit-Wärmetauscher sind, wobei der Verdampfer Wärme von einer umlaufenden Flüssigkeit aufnimmt und der Kondensator Wärme an eine umlaufende Flüssigkeit abgibt, wobei die Flüssigkeit, die Wärme an den Verdampfer abgibt, zwischen diesem und einem dritten Flüssigkeit-Luft-Wärmetauscher (8, 11) umläuft, der seinerseits Wärme von einem ersten Luftstrom aufnimmt, wobei dieser dritte Wärmetauscher ein Klimatisierungswärmetauscher (8) ist, der im Verlauf eines Luftstroms zum Fahrgastraum (9) angeordnet ist, während die Flüssigkeit, die Wärme vom Kondensator aufnimmt, zwischen diesem und einem vierten Flüssigkeit-Luft-Wärmetauscher (11, 8) umläuft, der seinerseits Wärme an einen zweiten Luftstrom abgibt, wobei dieser vierte Wärmetauscher ein Außenwärmetauscher (11) ist, der im Verlauf von Außenluft zum Fahrgastraum angeordnet ist, wobei diese beiden Wärmetauscher den dritten bzw. den vierten Wärmetauscher in einer im Sommer einsetzbaren ersten Konfiguration der Anlage bilden, während sie den vierten bzw. den dritten Wärmetauscher in einer im Winter einsetzbaren zweiten Konfiguration der Anlage bilden, wobei Mittel (10, 13) vorgesehen sind, um den ersten Luftstrom in den Fahrgastraum einzuleiten, um ihn im Sommer zu kühlen, und um den zweiten Luftstrom in den Fahrgastraum einzuleiten, um ihn im Winter zu erwärmen, wobei der Verdampfer, der Kondensator, der Klimatisierungswärmetauscher und der Außenwärmetauscher in einem ersten, zweiten, dritten bzw. vierten Strang (B1-B4) eines Flüssigkeitskreislaufs (7) eingebaut sind und wobei Umschaltmittel vorgesehen sind, um den dritten und vierten Strang in der ersten Konfiguration mit dem ersten und zweiten Strang und in der zweiten Konfiguration mit dem zweiten und ersten Strang zu einer Schleife zu schalten , **dadurch gekennzeichnet,** daß die Umschaltmittel acht Anschlußstränge (B5-B12) des besagten Flüssigkeitskreislaufs umfassen, und zwar einen fünften und sechsten Strang (B5, B6), die den ersten und dritten Strang aneinander anschließen können, um eine erste geschlossene Schleife zu bilden, einen siebten und achten Strang (B7, B8), die den zweiten und vierten Strang aneinander anschließen können, um eine zweite geschlossene Schleife zu bilden, einen neunten und zehnten Strang (B9, B10), die den ersten und vierten Strang aneinander anschließen können, um eine dritte geschlossene Schleife zu bilden, einen elften und zwölften Strang (B11, B12), die den zweiten und dritten Strang aneinander anschließen können, um eine vierte geschlossene Schleife zu bilden, sowie ein erstes Dreiwegeventil (EV1) mit einem ersten Anschluß (1-1), der mit einem Ende des ersten oder dritten Strangs verbunden ist, einem zweiten Anschluß (1-2), der mit einem Ende des fünften Strangs verbunden ist, und einem dritten Anschluß (1-3), der mit einem Ende des neunten oder elften Strangs verbunden ist, ein zweites Dreiwegeventil (EV2) mit einem ersten Anschluß (2-1), der mit einem Ende des ersten oder dritten Strangs verbunden ist, einem zweiten Anschluß (2-2), der mit einem Ende des sechsten Strangs verbunden ist, und einem dritten Anschluß (2-3), der mit einem Ende des zehnten oder zwölften Strangs verbunden ist, ein drittes Dreiwegeventil (EV3) mit einem ersten Anschluß (3-1), der mit einem Ende des zweiten oder vierten Strangs verbunden ist, einem zweiten Anschluß (3-2), der mit einem Ende des siebten Strangs verbunden ist, und einem dritten Anschluß (3-3), der mit einem Ende des neunten oder elften Strangs verbunden ist, ein viertes Dreiwegeventil (EV4) mit einem ersten Anschluß (4-1), der mit einem Ende des zweiten oder vierten Strangs verbunden ist, einem zweiten Anschluß (4-2), der mit einem Ende des achten Strangs verbunden ist, und einem dritten Anschluß (4-3), der mit einem Ende zehnten oder zwölften Strangs verbunden ist, und Mittel für eine koordinierte Steuerung, die die ersten Anschlüsse des ersten, zweiten, dritten und vierten Wegeventils mit ihren zweiten Anschlüssen, um die erste Konfiguration herzustellen, und mit ihren dritten Anschlüssen, um die zweite Konfiguration herzustellen, schalten können.

2. Anlage nach Anspruch 1, **dadurch gekennzeichnet,** daß zwei Umlaufpumpen (P1, P2) im ersten bzw. zweiten Strang eingebaut sind.

3. Anlage nach Anspruch 1, **dadurch gekennzeichnet,** daß zwei Umlaufpumpen (P1, P2) im dritten bzw. vierten Strang eingebaut sind.

4. Anlage nach einem der Ansprüche 2 oder 3 , **dadurch gekennzeichnet**, daß die Umlaufrichtung der Flüssigkeit von der ersten Konfiguration zur zweiten Konfiguration in denjenigen der ersten, zweiten, dritten und vierten Stränge umgekehrt wird, die nicht die Umlaufpumpen enthalten.

5. Anlage nach einem der Ansprüche 1 bis 4 , **dadurch gekennzeichnet,** daß sie einen einen zusätzlichen Wärmetauscher (14), der im Verlauf eines Luftstroms für die Beschlagfreihaltung der Windschutzscheibe des Fahrzeugs angeordnet ist, und Mittel umfaßt, um die Flüssigkeit in dem besagten zusätzlichen Wärmetauscher, parallel mit dem Verdampfer, in der zweiten Konfiguration umlaufen zu lassen.

6. Anlage nach Anspruch 5, **dadurch gekennzeichnet,** daß der Umlauf der Flüssigkeit in dem zusätzlichen Wärmetauscher in der ersten Konfiguration unterbrochen wird.
